# DEMANDE DE BREVET EUROPEEN

(11) **EP 3 620 371 A1**
(43) Date de publication de la demande: **11.03.2020**
(21) Numéro de dépôt: 19194919.7
(22) Date de dépôt: 02.09.2019
(51) Int. Cl.: B64C 7/02, B64D 29/08

(54) **NACELLE POUR UN MOTEUR D'AERONEF COMPORTANT DES MOYENS PREVENANT LA DEFORMATION DES CAPOTS DE SOUFFLANTE ARTICULES**

(30) Priorité: 05.09.2018 FR 1857959
(71) Demandeur: AIRBUS OPERATIONS, 31060 Toulouse Cedex 9 (FR)
(72) Inventeur: PORTE, Alain, 31770 Colomiers (FR); ALBET, Grégory, 31190 Grepiac (FR); SENTIER, Julien, 31770 Colomiers (FR)
(74) Mandataire: Cabinet Le Guen Maillet

(57) **Abrégé**

L'invention concerne une nacelle (14) comportant une structure fixe, un capot central (22) monté sur la structure fixe, un capot de soufflante (20) monté articulé par rapport au capot central (22) entre une position ouverte et une position fermée, et des moyens de verrouillage (100) qui sont répartis entre chaque capot de soufflante (20) et la structure fixe et qui sont prévus pour prendre une position verrouillée dans laquelle ils verrouillent le capot de soufflante (20) avec la structure fixe et une position déverrouillée dans laquelle ils ne verrouillent pas le capot de soufflante (20) avec la structure fixe, où la position verrouillée ne peut être prise que lorsque le capot de soufflante (20) est en position fermée, et où la position déverrouillée peut être prise que le capot de soufflante (20) soit en position ouverte ou fermée et où les moyens de verrouillage (100) se verrouillent et se déverrouillent à travers une rotation autour d'un axe longitudinal de la nacelle (14).

Les moyens de verrouillage empêchent ainsi la déformation des capots de soufflante en vol.

## Description

### DOMAINE TECHNIQUE

La présente invention concerne une nacelle pour un moteur d'aéronef où la nacelle comporte des moyens pour prévenir la déformation des capots de soufflante articulés, un système de propulsion comportant un moteur d'aéronef et une telle nacelle ainsi qu'un aéronef comportant au moins un tel système de propulsion.

### ETAT DE LA TECHNIQUE ANTERIEURE

Une nacelle d'un moteur d'aéronef constitue la peau extérieure du moteur et forme une surface aérodynamique qui assure un bon écoulement de l'air autour du moteur.

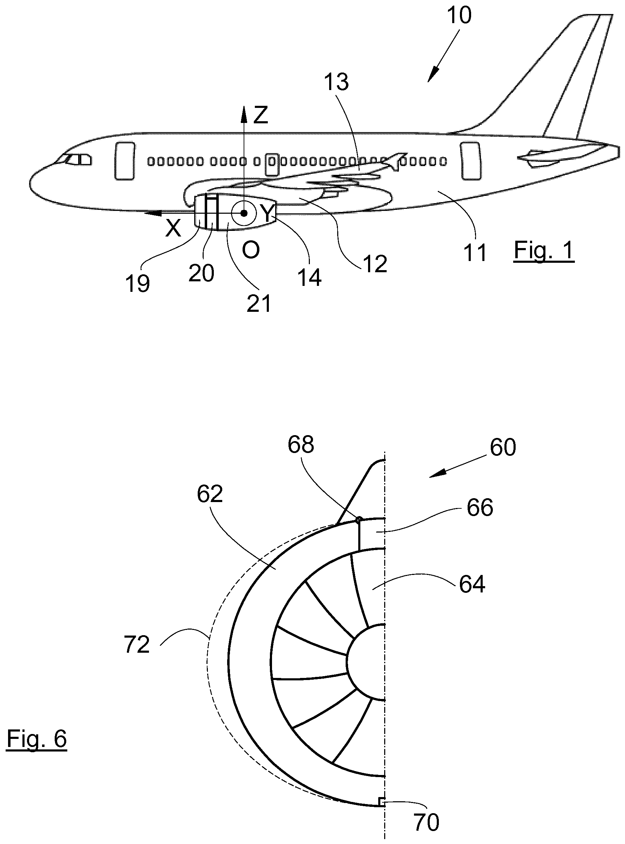

La Fig. 6 montre une demi vue de face d'une nacelle 60 de l'état de la technique. La nacelle 60 présente un capot de soufflante 62 qui est disposé autour du carter de soufflante et de la soufflante 64 d'un moteur d'aéronef.

Le capot de soufflante 62 est monté articulé sur une structure fixe 66 de la nacelle 60 ou du mât par l'intermédiaire d'articulations 68. Les articulations 68 sont disposées en partie haute et permettent d'ouvrir le capot de soufflante 62 lors des inspections de maintenance. Le capot de soufflante 62 est verrouillé en partie basse par un verrou 70 lorsqu'il est fermé.

Le capot de soufflante 62 est donc fixé uniquement en partie haute et en partie basse. Du fait des actions conjuguées des déformations du moteur et des déformations dues aux contraintes aérodynamiques, le capot de soufflante 62 aurait tendance à se déformer ce qui entraînerait l'apparition d'un phénomène d'écopage.

La référence 72 montre la déformation du capot de soufflante 62 en pointillés.

Pour éviter l'apparition de ces déformations, la structure du capot de soufflante 62 est renforcée, ce qui entraîne dans le même temps, un surpoids du capot de soufflante 62.

### EXPOSE DE L'INVENTION

Un objet de la présente invention est de proposer une nacelle pour un moteur d'aéronef où la nacelle comporte des moyens pour prévenir la déformation des capots de soufflante articulés.

A cet effet, est proposée une nacelle pour un moteur d'aéronef, ladite nacelle comportant :
- une structure fixe,
- un capot central monté sur la structure fixe,
- au moins un capot de soufflante monté articulé par rapport au capot central entre une position ouverte et une position fermée, et
- des moyens de verrouillage qui sont répartis entre chaque capot de soufflante et la structure fixe et qui sont prévus pour prendre une position verrouillée dans laquelle ils verrouillent le capot de soufflante avec la structure fixe et une position déverrouillée dans laquelle ils ne verrouillent pas le capot de soufflante avec la structure fixe, où les moyens de verrouillage se verrouillent et se déverrouillent à travers une rotation autour d'un axe longitudinal de la nacelle.

Les moyens de verrouillage empêchent ainsi la déformation des capots de soufflante en vol.

Selon un mode de réalisation particulier, les moyens de verrouillage comportent :
- un rail,
- une pluralité de guides, chacun étant solidaire de la structure fixe et présentant un orifice traversant qui permet le passage du rail,
- une pluralité d'élément mâles ou d'éléments femelles, chacun étant solidaire du rail et présentant un axe globalement parallèle à la direction de la tangente au rail au point de fixation dudit élément,
- pour chaque élément mâle ou femelle, un sabot solidaire d'un capot de soufflante et présentant un élément femelle ou un élément mâle qui en position fermée et verrouillée est coaxial avec ledit élément mâle ou femelle, et
- un système d'activation prévu pour déplacer le rail de la position déverrouillée dans laquelle aucun des éléments mâles n'est introduit dans un élément femelle à la position verrouillée dans laquelle chaque élément mâle est introduit dans un élément femelle, et inversement.

Selon un mode de réalisation particulier, la structure fixe comporte au moins un rail de guidage, le capot central comporte, pour chaque rail de guidage, un coulisseau qui est prévu pour se déplacer en translation par rapport audit rail de guidage et les moyens de verrouillage comportent :
- une pluralité d'éléments mâle ou femelle, chacun étant solidaire du capot de soufflante et présentant un axe globalement parallèle à la direction de la tangente au capot de soufflante au point de fixation dudit élément,
- pour chaque élément mâle ou femelle, un élément femelle ou mâle, où chacun est solidaire de la structure fixe et, qui en position fermée et verrouillée, est coaxial avec ledit élément mâle ou femelle, et
- un système d'activation prévu pour déplacer le capot central et les capots de soufflante de la position déverrouillée dans laquelle aucun des éléments mâles n'est introduit dans un élément femelle à la position verrouillée dans laquelle chaque élément mâle est introduit dans un élément femelle, et inversement.

L'invention propose également un système de propulsion comportant un moteur et une nacelle selon l'une des variantes précédentes.

L'invention propose également un aéronef comportant un système de propulsion selon la revendication précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue partielle et en perspective de face d'une nacelle selon un premier mode de réalisation de l'invention,
la Fig. 3 est une vue partielle et en perspective de la nacelle de la Fig. 2,
la Fig. 4 est une vue selon la flèche IV de la Fig. 3,
la Fig. 5 est une vue en perspective d'une nacelle selon un deuxième mode de réalisation de l'invention, et
la Fig. 6 est une vue de face d'une nacelle de l'état de la technique.

### EXPOSE DETAILLE DE MODES DE REALISATION

Dans la description qui suit, les termes relatifs à une position sont pris en référence à un aéronef en position d'avancement, c'est-à-dire comme il est représenté sur la Fig. 1.

La Fig. 1 montre un aéronef 10 qui comporte un fuselage 11 de chaque côté duquel est fixée une aile 13. Sous chaque aile 13 est fixé au moins un mât 12 qui supporte un moteur qui est entouré d'une nacelle 14 qui comporte une entrée d'air 19 à l'avant, des capots de soufflante 20 à l'arrière de l'entrée d'air 19 et une partie arrière 21 qui est à l'arrière des capots de soufflante 20 et comporte entre autres le système d'inversion de poussée. Le moteur et la nacelle 14, qui l'entoure, forment un système de propulsion selon l'invention.

Dans toute la description qui va suivre, par convention, la direction X correspond à la direction longitudinale du moteur, cette direction étant parallèle à l'axe longitudinal X de la nacelle. D'autre part, la direction Y correspond à la direction orientée transversalement par rapport au moteur, et la direction Z correspond à la direction verticale ou hauteur, ces trois directions X, Y, Z étant orthogonales entre elles.

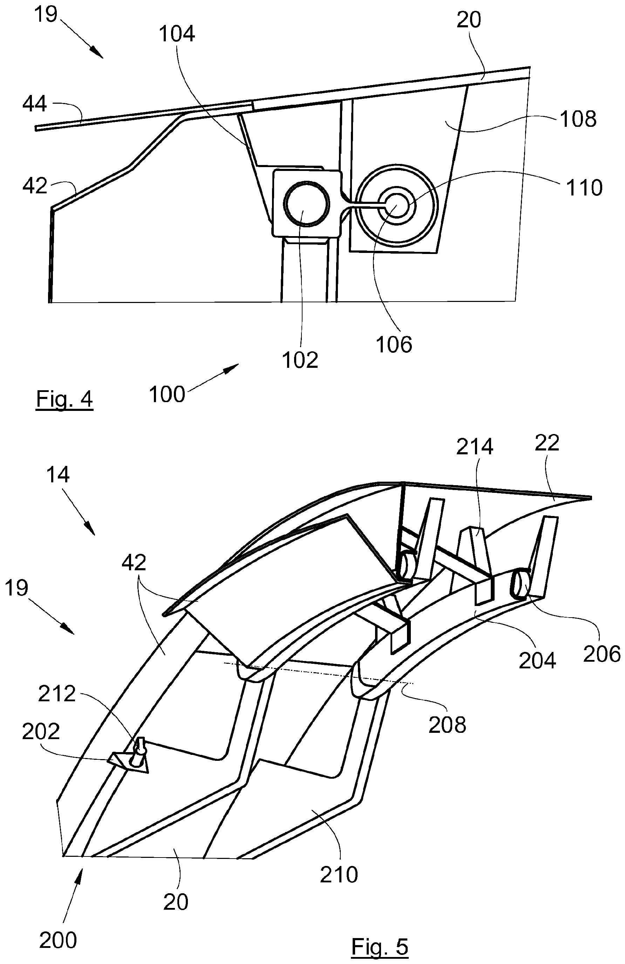

L'entrée d'air 19 comporte une structure fixe (42, Fig. 4) et une peau extérieure (44, Fig. 4) fixée sur la structure fixe 42.

La nacelle 14 comporte un capot central 22 qui est disposé de part et d'autre d'un plan médian vertical passant par l'axe longitudinal X. Le capot central 22 est monté sur la structure fixe 42 de l'entrée d'air 19 soit de manière fixe dans le premier mode de réalisation de l'invention, soit de manière mobile dans le deuxième mode de réalisation de l'invention.

Les capots de soufflante 20 sont montés articulés par rapport au capot central 22.

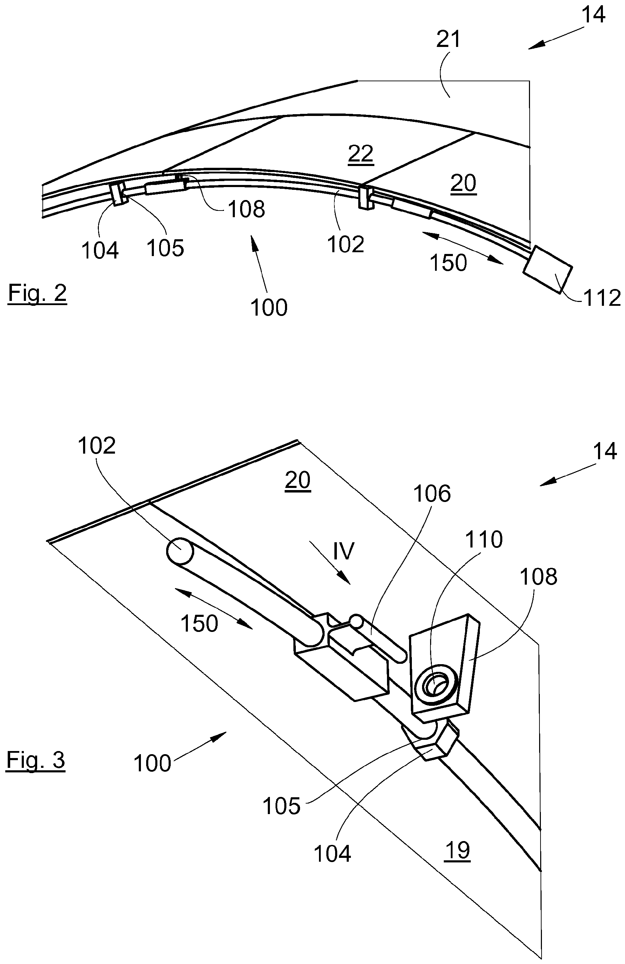

La Fig. 2 montre la nacelle 14 sans l'entrée d'air 19 et selon un premier mode de réalisation de l'invention. La Fig. 3 et la Fig. 4 montrent la nacelle 14 selon le premier mode de réalisation de l'invention et la Fig. 5 montre la nacelle 14 selon un deuxième mode de réalisation de l'invention.

La nacelle 14 comporte deux capots de soufflante 20 répartis de part et d'autre du capot central 22. Chaque capot de soufflante 20 est ainsi monté articulé par rapport au capot central 22 entre une position ouverte et une position fermée. Dans la position fermée, le capot de soufflante 20 est rabattu pour être en continuité avec la peau extérieure 44 de l'entrée d'air 19 et en position ouverte, le capot de soufflante 20 est écarté pour permettre l'accès sous le capot de soufflante 20. Bien que l'invention soit présentée ici dans le cas de deux capots de soufflante 20, elle s'applique de la même manière dès qu'il y a au moins un capot de soufflante 20. Chaque capot de soufflante 20 est monté pivotant autour d'un axe de charnière globalement parallèle à l'axe longitudinal X.

La nacelle 14 comporte des moyens de verrouillage 100, 200 qui sont répartis entre chaque capot de soufflante 20 et la structure fixe 42 de l'entrée d'air 19 et qui sont prévus pour prendre une position verrouillée dans laquelle ils verrouillent le capot de soufflante 20 avec la structure fixe 42 et une position déverrouillée dans laquelle ils ne verrouillent pas le capot de soufflante 20 avec la structure fixe 42.

Dans la position verrouillée, les moyens de verrouillage 100, 200 solidarisent le capot de soufflante 20 avec la structure fixe 42 de l'entrée d'air 19 empêchant sa déformation, et dans la position déverrouillée, les moyens de verrouillage 100, 200 ne solidarisent pas le capot de soufflante 20 avec la structure fixe 42 autorisant ainsi l'ouverture du capot de soufflante 20.

La position verrouillée ne peut être prise que lorsque le capot de soufflante 20 est en position fermée, et la position déverrouillée peut être prise que le capot de soufflante 20 soit en position ouverte ou fermée.

La différence entre le premier mode de réalisation et le deuxième mode de réalisation est liée entre autres aux moyens de verrouillage 100, 200 qui sont différents et qui se verrouillent et se déverrouillent à travers une rotation autour de l'axe longitudinal de la nacelle 14, ce qui correspond à un déplacement tangentiel par rapport à un cercle centré sur ledit axe longitudinal de la nacelle 14.

La Fig. 3 montre la nacelle 14 vue depuis l'intérieur dans la position déverrouillée des moyens de verrouillage 100.

Dans le premier mode de réalisation de l'invention, le capot central 22 est fixé sur la structure fixe 42 de l'entrée d'air 19 ou au mât 12.

Dans le premier mode de réalisation de l'invention, les moyens de verrouillage 100 comportent :
- un rail 102,
- une pluralité de guides 104, chacun étant solidaire de la structure fixe 42 de l'entrée d'air 19 et présentant un orifice traversant 105 qui permet le passage du rail 102, le rail 102 étant coulissant par rapport à chaque guide 104,
- une pluralité d'éléments mâles 106, chacun étant solidaire du rail 102 et présentant un axe globalement parallèle à la direction de la tangente au rail au point de fixation de l'élément mâle 106,
- pour chaque élément mâle 106, un sabot 108 solidaire d'un capot de soufflante 20 et présentant un élément femelle 110 qui en position fermée et verrouillée est coaxial avec l'élément mâle 106, et
- un système d'activation 112 prévu pour déplacer le rail 102 de la position déverrouillée dans laquelle aucun des éléments mâles n'est introduit dans un élément femelle à la position verrouillée dans laquelle chaque élément mâle est introduit dans un élément femelle, et inversement.

Le déplacement du rail 102 est globalement une rotation autour de l'axe longitudinal X. Le rail 102 présente une forme arquée, et il peut être par exemple circulaire ou prendre une forme particulière permettant de suivre au mieux la forme intérieure du capot de soufflante 20.

Ainsi, en fonction du sens de déplacement du rail 102 dans les guides 104 (double flèche 150), les éléments mâles 106 vont pénétrer dans les éléments femelles 110 ou en sortir, permettant ainsi de passer de la position verrouillée à la position déverrouillée.

Bien sûr, il est possible d'inverser la fonction mâle et la fonction femelle entre le rail 102 et les sabots 108. Chaque élément mâle 106 est alors remplacé par un élément femelle et chaque élément femelle 110 par un élément mâle.

Le système d'activation 112 est par exemple un moteur, un actionneur du type vérin ou un système manuel.

Dans le premier mode de réalisation de l'invention, il y a un seul rail 102 pour les deux capots de soufflante 20 mais il est possible de prévoir un rail par capot de soufflante 20. Dans le cas d'un rail 102, celui-ci prend globalement la forme d'un cercle et dans le cas de deux rails, chacun prend alors globalement la forme d'un demi-cercle. Bien sûr des formes plus proches de la forme intérieure du capot de soufflante 20 sont possibles.

Il y a une pluralité d'éléments mâles 106 et de sabots 108 répartis angulairement autour de l'axe longitudinal X, le long des capots de soufflante 20 pour maintenir au mieux lesdits capots de soufflante 20 par rapport à la structure fixe 42 de l'entrée d'air 19. Il y a par exemple une vingtaine de ces éléments par capot de soufflante 20.

La Fig. 5 montre le deuxième mode de réalisation de l'invention où le capot central 22 est maintenant mobile en rotation.

La structure fixe 42 de l'entrée d'air 19 est fixée sous la peau extérieure 44 et épouse globalement sa forme. La structure fixe 42 est fixée par exemple à un cadre arrière.

La structure fixe 42 présente au moins un rail de guidage 204 qui sont ici au nombre de deux, et qui prennent chacun la forme d'un arc concentrique avec le capot central 22.

Selon un mode de réalisation particulier, chaque rail de guidage 204 prend la forme d'un arc de cercle concentrique avec le capot central 22, c'est-à-dire globalement centré sur l'axe longitudinal X.

Le capot central 22 comporte, pour chaque rail de guidage 204, un coulisseau 206 qui est prévu pour se déplacer en translation par rapport audit rail de guidage 204. Du fait de la forme arquée de chaque rail 204, le déplacement de chaque coulisseau 206 est globalement une rotation autour de l'axe longitudinal X. Dans le mode de réalisation de l'invention de la Fig. 5, la solidarisation du capot central 22 et des coulisseaux 206 s'effectue par l'intermédiaire d'entretoises 214.

Chaque capot de soufflante 20 est monté articulé sur les deux coulisseaux 206 autour d'un axe de charnière 208 globalement parallèle à l'axe longitudinal X, ici par l'intermédiaire de bras 210.

Les moyens de verrouillage 200 comportent :
- une pluralité d'éléments mâles 212, chacun étant solidaire du capot de soufflante 20 et présentant un axe globalement parallèle à la direction de la tangente au capot de soufflante 20 au point de fixation dudit élément 212,
- pour chaque élément mâle 212, un élément femelle 202, où chacun est solidaire de la structure fixe 42 de l'entrée d'air 19 et, qui en position fermée et verrouillée, est coaxial avec ledit élément mâle 212, et
- un système d'activation prévu pour déplacer le capot central 22 et les capots de soufflante 20 de la position déverrouillée dans laquelle aucun des éléments mâles n'est introduit dans un élément femelle à la position verrouillée dans laquelle chaque élément mâle est introduit dans un élément femelle, et inversement.

Tous les éléments mâles 212 sont orientés dans le même sens, qui est ici le sens antihoraire.

Ici, la structure fixe 42 porte les éléments femelles 202 répartis sous la peau extérieure 44 angulairement autour de l'axe longitudinal X.

A partir de la position fermée et verrouillée, c'est-à-dire lorsque les éléments mâles 212 sont logés dans les éléments femelles 202, les éléments mâles 212 sont déplacés en rotation par déplacement, ici dans le sens horaire, des coulisseaux 206 par rapport aux rails de guidage 204. Ce déplacement permet de sortir les éléments mâles 212 des éléments femelles 202 et il est alors possible d'ouvrir les capots de soufflante 20 par rotation autour de l'axe de charnière 208.

Un déplacement inverse permet de revenir en position fermée et verrouillée.

De la même manière, la fonction mâle et la fonction femelle peuvent être inversées entre le capot de soufflante 20 et la structure fixe 42 de l'entrée d'air 19.

## Revendications

1. Nacelle (14) pour un moteur d'aéronef (10), ladite nacelle (14) comportant :
- une structure fixe (42),
- un capot central (22) monté sur la structure fixe (42),
- au moins un capot de soufflante (20) monté articulé par rapport au capot central (22) entre une position ouverte et une position fermée, et
- des moyens de verrouillage (100, 200) qui sont répartis entre chaque capot de soufflante (20) et la structure fixe (42) et qui sont prévus pour prendre une position verrouillée dans laquelle ils verrouillent le capot de soufflante (20) avec la structure fixe (42) et une position déverrouillée dans laquelle ils ne verrouillent pas le capot de soufflante (20) avec la structure fixe (42), où les moyens de verrouillage (100, 200) se verrouillent et se déverrouillent à travers une rotation autour d'un axe longitudinal de la nacelle (14).

2. Nacelle (14) selon la revendication 1, **caractérisée en ce que** les moyens de verrouillage (100) comportent :
- un rail (102),
- une pluralité de guides (104), chacun étant solidaire de la structure fixe (42) et présentant un orifice traversant (105) qui permet le passage du rail (102),
- une pluralité d'éléments mâles (106) ou d'éléments femelles, chacun étant solidaire du rail (102) et présentant un axe globalement parallèle à la direction de la tangente au rail au point de fixation dudit élément (106),
- pour chaque élément mâle (106) ou femelle, un sabot (108) solidaire d'un capot de soufflante (20) et présentant un élément femelle (110) ou un élément mâle qui en position fermée et verrouillée est coaxial avec ledit élément mâle (106) ou femelle, et
- un système d'activation (112) prévu pour déplacer le rail (102) de la position déverrouillée dans laquelle aucun des éléments mâles n'est introduit dans un élément femelle à la position verrouillée dans laquelle chaque élément mâle est introduit dans un élément femelle, et inversement.

3. Nacelle (14) selon la revendication 1, **caractérisée en ce que** la structure fixe (42) comporte au moins un rail de guidage (204), **en ce que** le capot central (22) comporte, pour chaque rail de guidage (204), un coulisseau (206) qui est prévu pour se déplacer en translation par rapport audit rail de guidage (204) et **en ce que** les moyens de verrouillage (200) comportent :
- une pluralité d'éléments mâles (212) ou femelles, chacun étant solidaire du capot de soufflante (20) et présentant un axe globalement parallèle à la direction de la tangente au capot de soufflante (20) au point de fixation dudit élément (212),
- pour chaque élément mâle (212) ou femelle, un élément femelle (202) ou mâle, où chacun est solidaire de la structure fixe (42) et, qui en position fermée et verrouillée, est coaxial avec ledit élément mâle (212) ou femelle, et
- un système d'activation prévu pour déplacer le capot central (22) et les capots de soufflante (20) de la position déverrouillée dans laquelle aucun des éléments mâles n'est introduit dans un élément femelle à la position verrouillée dans laquelle chaque élément mâle est introduit dans un élément femelle, et inversement.

4. Système de propulsion comportant un moteur et une nacelle (14) selon l'une des revendications précédentes.

5. Aéronef (10) comportant un système de propulsion selon la revendication précédente.
